(19) Europäisches Patentamt
European Patent Office
Office européen des brevets

(11) EP 1 320 026 A1

(12) EUROPEAN PATENT APPLICATION

(43) Date of publication:
18.06.2003 Bulletin 2003/25

(51) Int Cl.[7]: G06F 7/58

(21) Application number: 01830764.5

(22) Date of filing: 13.12.2001

(84) Designated Contracting States:
AT BE CH CY DE DK ES FI FR GB GR IE IT LI LU MC NL PT SE TR
Designated Extension States:
AL LT LV MK RO SI

(71) Applicant: STMicroelectronics S.r.l.
20041 Agrate Brianza (Milano) (IT)

(72) Inventors:
- Kocarev, Ljupco
San Diego, CA 92122 (US)
- Stojanovski, Toni
San Diego, CA 92122 (US)
- Rizzotto, Gianguido
23862 Civate (IT)
- Italia, Francesco
95125 Catania (IT)
- Porto, Domenico
95123 Catania (IT)

(74) Representative: Pellegri, Alberto et al
c/o Società Italiana Brevetti S.p.A.
Piazza Repubblica, 5
21100 Varese (IT)

# (54) Method for generating a random number sequence and a relative random bit generator

(57) A method for generating a random number sequence whose randomness properties are determined *a priori*, comprises the steps of defining a parametric map; calculating, in function of parameters of the map, the entropy and the Lyapunov exponent of random number sequences obtainable using the parametric map; identifying at least a set of values of parameters for which the entropy and the Lyapunov exponent are positive numbers the map has no attracting point; assigning a pre-established value as a first feedback value and carrying out cyclically the following steps for generating a random number sequence:

(i) determining said parameters inside the set as the numerical values of respective physical quantities;

(ii) outputting a random number, according to said map with the parameters and the assigned feedback value;

(iii) assigning as new feedback value said output random number.

A circuit, preferably realized using a switched current technique, implements the method of the invention for generating a random bit sequence.

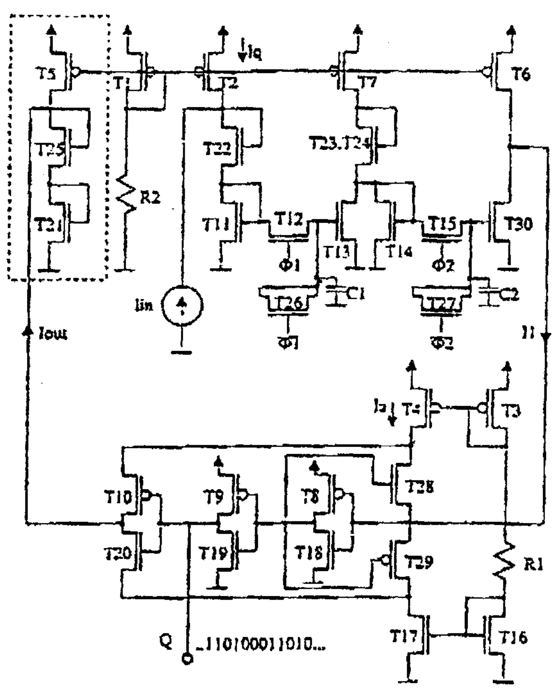


FIG. 7

EP 1 320 026 A1

## Description

FIELD OF THE INVENTION

The present invention relates to random numbers generation and in particular to a method for generating a random number sequence and a relative random bit generator.

BACKGROUND OF THE INVENTION

Random number generators (RNG) are extremely important in cryptography for generating cryptographic keys and for initializing in a random manner certain variables in cryptographic protocols. When ultimate security is required, one must turn to a cipher that is theoretically unbreakable: one-time pad [1]. Such a cipher implies a truly random sequence, and pseudo-random number generators (PRNG) are inappropriate for this purpose.

It is also an absolute necessity that cryptographic keys and initialization variables in cryptographic protocols be generated by RNGs. Otherwise, if a PRNG is employed, the security of the cryptographic algorithm and protocol can be no higher than the security of the PRNG. So, in all these cases where PRNGs are not suitable and unpredictability is a more important requirement than repeatability, one must turn to generators of truly random numbers.

Hereinbelow, the expression "random numbers generator" indicates a generator of truly random numbers.

It is widely accepted that the core of any RNG must be an intrinsically random physical process. So, it is not surprising that the proposals and implementations of RNGs range from tossing coin, throwing a dice, drawing from a urn, drawing from a deck of cards and spinning a roulette to measuring thermal noise from a resistor and shot noise from a Zener diode or from a vacuum tube [2, 3, 4, 5, 6], measuring radioactive decay from a radioactive source [2, 3, 7], integrating dark current from a metal insulator semiconductor capacitor [8], detecting locations of photoevents [9], and sampling a stable high-frequency oscillator with an unstable low-frequency clock [10, 11, 12].

There are methods that employ physical processes for generating a sequence of discrete random variables (desirably independent and with identical distribution), most usually binary ones, and later on to derive the desired distribution from them. The drawback of these methods is the random and uncontrollable appearance of the random physical process, that may bias the binary sequence.

In order to reduce any biases of the distribution of the generated sequence, a postprocessing of the produced sequence is usually carried out on a digital computer. Finally, the proper design and correct work (no silent breakdowns) of the RNG, and the assumed randomness of the physical process are checked via extensive statistical tests. However, no finite number of statistical tests can prove that a sequence is random: tests can only show that a sequence is not random.

Theory and tools of nonlinear systems and their chaotic behavior provide an alternative and qualitatively different type of RNGs. Several authors have already proposed to use chaotic systems as sources of physical randomness [13, 14, 15, 16, 17, 18, 19, 20]. When using chaotic systems there is no need to assume their randomness, because when observed in a coarse-grained state space they do behave randomly. However, the existing designs of chaotic RNGs still are affected by the same drawbacks as the classical RNGs based on the assumed randomness of a physical process.

DISCUSSION OF THE PRIOR ART

For a better comprehension of the innovative aspects of the present invention, a brief review of the state of the art is presented.

A general RNG architecture is depicted in Figure 1. A physical process, assumed to be random, is converted into a sequence of numbers via a converting device. The redundancy and non-randomness of the sequence is reduced by a postprocessing step. Statistical tests are applied to check if the generated sequence is truly random, and implicitly to check the assumption about the randomness of the physical process.

### Random physical processes

What is the basis of the randomness assumption? In most cases such as tossing a coin, throwing a dice, drawing from a urn, drawing from a deck of cards, spinning a roulette, thermal noise, shot noise, avalanche noise and unstable oscillation the basis is another plausible assumption: a physical process is produced by a huge number of events which give rise to a complex and unpredictable behavior that can be analyzed only via probabilistic terms. For example, thermal noise is the resulting process of the Brownian motion of electrons; randomness of radioactive decay stems from the Heisenberg uncertainty principle of quantum physics.

Another interesting physical process is laser speckle patterns, which are produced when rough surfaces of

multimode lasers are illuminated by lasers [21, 22]. Random space appearance of speckles is exploited to produce large 2D arrays of random numbers, that are essential in parallel architecture implementations of Boltzman machines and simulated annealing. However, generating timeindependent successive speckle patterns is the major short-coming since one must rely on other physical sources of randomness to randomly modulate in time the speckle.

**Converter**

The task of the converting device is to convert the assumed randomness of a physical process into a sequence of equiprobable independent digits, most usually binary ones. Later on, a postprocessing is necessary to convert the binary sequence into a sequence of i.i.d. random variables with the desired probability distribution. Therefore, it is no surprising that the previous workers in the field, with almost no exception, have examined the generation of random binary sequences, an approach followed also by the inventors.

**Impulse counting**

One of the most reliable and most accurate methods for generating random numbers, due to Vincent and his co-workers [2, 3], is illustrated in the functional diagram of Fig. 2. A physical process is used to generate a sequence of randomly timed impulses. If necessary, a detector is used to convert them into electrical impulses as in the case of radioactive decay. Then the impulses are amplified enough to assure that the discriminator correctly detects them. A binary counter modulo 2 counts the randomly timed impulses for fixed time intervals. States of the counter at the end of the fixed time intervals constitute the random number sequence.

A very interesting proposal for a Poisson random process is due to Agnew [8]. Agnew compares the number of electrons generated for a fixed time interval in two neighboring metal insulator semiconductor capacitors, and generates one bit on basis of the comparison. Dark current is the generating mechanism, and the electron generating process is a Poisson process. The two capacitors are very close to each one, and exhibit a very high common mode rejection. So, they are very resistant to attempts trying to control their behavior. Exactly matching two capacitors is an impossible task, and two mismatched cells will produce a biased sequence of 0s and 1s. Using outputs of several pairs of capacitors can reduce the bias.

**Binary quantization**

Conversion of random physical processes into sequences of random numbers frequently is done via quantization of the random signal, in the way described in the functional diagram of Fig. 3. For this purpose, a binary quantizer (comparator with one threshold level) is most frequently used [4], and its threshold level is set to the mean value of the input random process, so that both output levels are equally probable. The output of the comparator is equidistantly sampled to produce a random binary sequence.

Murry [4] gives a qualitative approach towards the relation between the sampling frequency and the noise bandwidth, and concludes that the maximum sampling frequency should be 1.155 $\times$ the noise bandwidth to allow for the correlation between the adjacent bits to die out.

Sokal [5] improved Murry's results and showed how to choose the minimum passband frequencies of the noise for a predefined sampling frequency and bit-tobit correlation. A hysteresis around the threshold level may worsen the performances of the RNG. If the hysteresis is comparable to the input noise level, then the input signal might frequently wander inside the hysteresis for a long time without causing an output change (see Fig. 4 in [4]). This phenomenon introduces correlation between adjacent bits.

**Two unstable oscillators**

Figure 4 sketches another well-known architecture of RNGs [10, 11, 12]. A stable high-frequency oscillator is sampled with an unstable low-frequency RX clock, and then quantized. Short-term (one period) frequency fluctuations of the unstable low-frequency oscillator are the source of randomness.

Fairfield et al. [11] suggest that the standard deviation of the low frequency oscillator period variation has to be larger than the high frequency oscillator period in order to produce satisfactorily decorrelated samples. Such variations basically are caused by thermal and shot noise in electronic components of the oscillator circuit.

In [12], two unstable fast oscillators with close frequencies are used. Trying to increase the period of fluctuations, besides the thermal noise of resistors and transistors, the authors make one of the fast oscillators very susceptible to the fluctuations in the power supply while a heater circuit is laid out near the other fast oscillator thus affecting the temperature of the silicon.

Despite all these designer attempts, there is a large amount of redundancy in the output sequence, as reported

in [10] and [12]. In [11] a scrambling circuit is used to reshape the redundancy, not to reduce it, and make more difficult for simple statistical tests to detect the redundancy and nonrandomness in the sequence. In [12] the authors do not even attempt to reduce the redundancy.

**Processor**

Circuit asymmetry, parameter variations, noise bandwidth etc. can lead to a biased nonideal physical source, limited RNG. Redundancy in the output sequence, either in the form of nonequiprobable or correlated bits, can be reduced to a desired extent via processing it.

An useful summary on debiasing methods can be found in [23]. It is possible to use stream parity, transition mappings, fast Fourier transform, compression, or hash functions to debias a bit stream. When using compression methods, one should keep in mind that the existing compression methods are invertible. On one side, they reduce the redundancy from the biased bit sequence (for example, through searching for repeating sequences as in the case of Lempel-Ziv algorithm [24, 25]), but on the other side they insert another redundancy in the compressed sequence. On basis of this redundancy one can carry out the decompression back to the original sequence. Therefore, compression algorithms should be modified so that the control patterns intended to enable the decompression, which are an actual redundancy, are removed.

**Statistical tests**

Statistical tests are intended to detect possible regularities in the output sequence of the RNG, or to derive an information source model of the RNG. Statistical tests implicitly also check the designers assumption about the randomness of the physical process. Usually one runs a certain number of statistical tests, and if a sequence passes them, then one wishfully deduces that the sequence will pass any other test of randomness.

Though a finite number of statistical tests cannot prove that a sequence is random. Statistical tests can only show that a sequence is not random in case when the sequence fails at least one test. In other words, it is not possible to prove that a sequence is not compressible by all possible compression algorithms, unless their number is infinite.

Parameter fluctuations in any of the blocks of Fig. 1 may cause the RNG to leave the desired random working regime and start generating regular sequences.

Therefore, statistical tests must be run from time to time to check for a possible silent breakdown of the RNG.

**RNGs available on the market**

RNGs currently available on the market easily fit in the discussion provided in this section. As a source of randomness, they use thermal noise from a resistor [26, 27] and shot noise from Zener diode [28, 29]. As a converter, they use binary quantizers, as depicted in Fig. 3,in all cases. Very simple tests such as counting the frequency of appearance of 1s, intended to detect a breakdown of the RNG, are implemented in hardware, while more complicated statistical tests are implemented in software routines.

As a prove of quality, manufacturers cite different statistical tests passed by their RNGs, which we have shown to be inconclusive. Some manufacturers [29, 28] employ extensive software postprocessing to reduce the redundancy present in the raw bit stream. Bit generation rates are 7600 bits/sec [28], 10000 bits/sec [26], 20000 bits/sec [27], 76000 bits/sec [29]. These are the maximum bit rates suggested by the manufacturers. A thorough examination of performances of these RNGs can be found on [30].

**Existing Chaos based RNGs**

Proposals for analogue noise generation using chaotic circuits preceded the works on chaotic RNGs. White noise generation using the logistic map was analyzed in [31], while for the same purpose a 1D piecewise linear map was used in [15, 17]. In [16] hopping transitions of a 1D piecewise linear chaotic map are used for 1/*f* noise generation. Some of these papers [15, 17] also mention RNG as possible application of their circuits.

Still the era of chaotic RNGs begins with the works of Bernstein and Lieberman [14], and Espejo-Meana et al. [13]. In these two papers and in those following them, chaotic circuits serve as physical sources of randomness. Tent map implemented via switched-capacitor circuits in [13] and a first-order nonuniformly sampling digital phase-locked loop in [14] are used to produce a binary random sequence through a binary quantization of a chaotic signal.

Failures or drops in performances may silently occur in classical RNGs, and periodic check-ups (via the black magic of complicated statistical tests) and tuneups are necessary in order to maintain the performances. This problem is highly relieved when chaotic circuits are used. The nominal parameter values should lie in the middle of the region of parameter values that provide a chaotic behavior, as done in [13, 14, 18]. Thus, temperature changes, components

aging, power supply fluctuations, clock feed-through and other influences are less probable to cause the nonlinear circuit to leave the parameter region of chaotic behavior.

A unique solution to the problem of silent failures is given in the very interesting paper by Davis et al. [19]. They numerically simulated air-flow in a spinning hard-disk, and observed an air turbulence. Chaotic nature of the air turbulence causes random disk access times. Davis et al. evaluate that at least 100 bits of information per minute can be generated via timing the disk accesses. The operating system detects and reports disk faults, such as no spinning, and also detects failures in the hard-disk based RNG. The advantage of this RNG of not requiring any additional hardware is opposed to the fact that an access to lowlevel software routines is needed, a hard disk may stop spinning when the computer is in power saving mode, and a RAM cache may make inaccessible the variations in the disk accesses times.

## OBJECT AND SUMMARY OF THE INVENTION

It has been found and is the object of the present invention a method for generating a random number sequence that overcomes the above discussed limitations and drawbacks of the known methods. Differently from prior art methods, with the method of the invention it is possible to determine *a priori* properties of the generated sequence and to find optimal parameter values for the generator. For example, it is possible to calculate *a priori* whether the entropy and Lyapunov exponent of the output sequence are positive numbers or not.

The gist of the invention consists in generating random numbers using parametric maps whose parameters are numerical values of physical quantities. At first glance, the approach of generating random sequences using a parametric map could seem impossible because they are normally used to generate deterministic sequences. Surprisingly, according to the method of the invention as will be demonstrated, they are used to produce true random sequences because the values of parameters are numerical values of physical quantities and thus are true random numbers.

Furthermore, differently from prior art techniques, it is not necessary that the generated sequence be subjected to randomness tests, because using parametric maps it is possible to determine *a priori* at least a set of values of the parameters for which the generated sequence is chaotic.

More precisely the object of the invention is a method for generating a random number sequence, comprising the steps of defining a parametric map; calculating, in function of parameters of the map, the entropy and the Lyapunov exponent of random number sequences obtainable using the parametric map; identifying at least a set of values of parameters for which the entropy and the Lyapunov exponent are positive numbers the map has no attracting point; assigning a pre-established value as a first feedback value and carrying out cyclically the following steps for generating a random number sequence:

a) determining said parameters inside the set as the numerical values of respective physical quantities;

b) outputting a random number, according to said map with the parameters and the assigned feedback value;

c) assigning as new feedback value said output random number.

The parametric map to be chosen may be any parametric map, even a nonlinear map, provided that it is possible to analyze *a priori* the mechanism of generation of information, that is it is possible to know for which values of parameters the generated sequence is chaotic. For instance, it is possible to use a piecewise linear one-dimensional parametric map or even a multi-dimensional parametric map.

The random number sequence so produced may be used in a method for generating a random bit sequence. The latter may simply consists in defining a pair of sets of values first and second by a Markov partition of the set of real numbers; producing random numbers using the previously described method; outputting a high or a low random bit for each random number, whether the random number is comprised in the first set or in the second set, respectively.

Optionally, the generated sequence may be subjected to tests for determining its Markov character and its redundancy. It is also possible to calculate the functional dependence of the redundancy on parameter values and to modify the values of parameters accordingly, to obtain a random sequence with a desired redundancy and Markov character.

A further object of the invention is a circuit, that is preferably realized using a switched current technique, implementing the method of the invention for generating a random bit sequence.

The invention is more precisely defined in the annexed claims.

## BRIEF DESCRIPTION OF THE DRAWINGS

The advantages of the invention will appear even more evident through a detailed description of the invention

referring to the attached drawings, wherein:

**Figure 1** is a general architecture of a RNG;
**Figure 2** is a functional diagram illustrating a known circuit for generating a random sequence;
**Figure 3** is a second functional diagram illustrating another known circuit for generating a random sequence;
**Figure 4** is a third functional diagram illustrating a RNG with unstable oscillators;
**Figure 5** depicts a possible graphic of the PL1D map (3);
**Figure 6** shows a possible periodic orbit obtained using the PL1D map of Fig. 5;
**Figure 7** depicts an embodiment of the random bit generator of the invention;
**Figure 8** is a diagram resulting from a SPICE simulation of the circuit of Fig. 7.

DESCRIPTION OF SEVERAL EMBODIMENT OF THE INVENTION

In the existing chaos based RNGs chaos is used to substitute classical sources of physical randomness. The assumed randomness of thermal noise or shot noise is substituted by the intrinsic randomness of chaos when observed in a partitioned space.

None would challenge the very plausible assumption of randomness of thermal noise or roulette. However, deriving the information source model of a thermal noise based RNG strongly depends on the assumptions made, and the only way to check the assumptions is via statistical tests. When a circuit with proven chaotic behavior is used, then *a posteriori* inconclusive indications of randomness in form of statistical tests, are substituted with *a priori* proofs of chaotic behavior, which is a very significant benefit. For such a RNG, statistical tests are nothing else but a sanity check [19].

Davis et al. [19] did recognize this benefit, but analyzing the air turbulence in a spinning hard disk, they did not consider the design of an application oriented chaotic circuit. As the bits produced by a spinning hard disk are highly biased, they rather concentrate on a novel usage of FFT as a debiasing algorithm. The other authors in the area did not recognize the benefit of avoiding the need for statistical tests. Espejo-Meana et al. [13] and Kuusela [18] still resort to statistical tests to prove the unprovable randomness of generated sequences, and then to conclude that the RNG behaves as an information source.

If for whatever reasons periodic checkups of RNG performances need to be done, it is possible to carry out several more reliable and simpler measures than statistical tests. Proper behavior of a RNG can be checked by measuring the parameter values and checking if they belong to the chaotic region, or to the intended part of the chaotic region.

If measuring the parameter values is not desirable because it may interrupt the work of a RNG, then still one can easily and in short time check whether the intended chaotic circuit oscillates in the chaotic regime by means of the Lyapunov exponents, dimensions, KS entropy and other quantitative measures of chaos.

Given that for this purpose it is not necessary to exactly measure the chaos, but rather to detect a possible drop in the performance caused by leaving the chaotic regime or moving towards a parameter region with smaller KS entropy, then one can resort to computing coarse-grained entropy rates (CER). CERs are relative measures of unpredictability and randomness of time series.

When a time-series is generated by a dynamical system, then CERs are related to the KS entropy. CERs can be computed fast and easily, are robust to the presence of noise in the time-series, and reliably measure the randomness of even quite short time-scries. Testing procedure can be summarized as: positive KS entropy, positive Lyapunov exponent, positive CER $\Rightarrow$ chaotic behavior $\Rightarrow$ RNG.

As stated before, the method of the invention may be implemented using any parametric map. The method of the invention will now be described in detail by making reference to a particularly important example of choice of parametric map.

The following description will refer to a piecewise linear one-dimensional parametric map, though the method of the invention may use any other parametric map, even non linear and multidimensional.

Moreover, even a hardware implementation of the method of the invention by an integrated electronic circuit, will be illustrated in detail.

**Piecewise Linear One-Dimensional Parametric Map**

Piecewise linear one-dimensional maps (PL1D) are maps fully described by the following equations:

$$x'_{n-1} = \begin{cases} q'_1 + k'_2 \cdot \left(x'_n - T_L\right) & \text{for } x'_n < T_L \\ q'_2 + k'_2 \cdot \left(x'_n - T_L\right) & \text{for } x'_n \geq T_L \end{cases} \qquad (1)$$

where $k'_1, k'_2 > 1$, $q'_1 > T_L > q'_2$. As map (1) is everywhere expanding, there are no micro Feigenbaum diagrams (there are no stable periodic windows) in the chaotic region. It is worth noticing that

(i) a 2-regions PL1D map can be with $h_{KS}$ =1[*bit*], which is sufficient for a binary RNG;
(ii) $T_L \in B(\beta) \Leftrightarrow \beta$ is a generating partition;
(iii) the number of parameters is very small and analysis of sensitivity of map's properties on parameters' variations can be analytically calculated;
(iv) PL1D maps can be simply implemented by virtue of switched capacitor [13, 15] and switched current circuits [17], which can operate at high frequencies.

It must be stressed the fact that the following analysis can be generalized to any arbitrary multidimensional map for which it is possible to define a generating partition for any value of its parameters. Therefore, Eq. (1) is only an example of a large set of possible maps that can be used to generate random numbers.

**Linear conjugacy**

For every set of parameters of map (1), following transformation

$$x = \begin{cases} \left(x' - T_L\right) / \left(T_L - q'_2\right) & \text{for } k'_1 \leq k'_2 \\ \left(x' - T_L\right) / \left(T_L - q'_1\right) & \text{for } k'_1 > k'_2 \end{cases} \qquad (2)$$

yields a linearly conjugate map

$$x_{n+1} = f\left(x_n\right) = \begin{cases} q_1 + k_1 x_n & \text{for } x_n < 0 \\ -1 + k_2 x_n & \text{for } x_n \geq 0 \end{cases} \qquad (3)$$

where parameters of (1) and (3) are related via

$$\begin{cases} k_1 = k'_1, k_2 = k'_2, q_1 = \dfrac{q'_1 - T_L}{T_L - q'_2} & \text{for } k'_1 \leq k'_2 \\ k_1 = k'_2, k_2 = k'_1, q_1 = \dfrac{T_L - q'_2}{q'_1 - T_L} & \text{for } k'_1 > k'_2 \end{cases} \qquad (4)$$

Due to the linear conjugacy between (1) and (3), map (3) has entropies, Lyapunov exponent, Markov character of partitions (to be described later on), and almost all other features of (1). A reduction in the number of parameters from 5 to 3, results in a simpler analysis and better understanding of (3) than that of map (1).

**Parasitic attractors**

In practical implementations of map (3) the maximum and minimum values of map's states are limited by saturation. This introduces regions of constant output values in map (3), as illustrated on Fig. 5, for $k_1 < k_2 < 2$, being

$I_+$ and $I_-$ a positive and a negative saturation value, respectively. The chaotic attractor is bounded to (-1, $q_1$). If the map does not intersect with the line $x_{n+1} = x_n$, then there are no attracting points.

When an attracting point exists, for example point **P** in Fig. 5, then the basin of attraction of the chaotic attractor is ($-\infty$, $U_2$) and does not include value $I_+$ corresponding to the positive saturation value. $U_2$ is the intersection point of the lines $y = -1 + k_2x$ and $y = x$, and is equal to $U_2 = 1/(k_2 - 1)$. Attracting point **P** is with basin of attraction ($U_2$, $+\infty$). As a result, power-on transient may lead to a parasitic stable point instead to the desired chaotic motion. Even when the power-on transient leads to the chaotic attractor, if $f(q_1)$ is very close to $U_2$, then a noise larger than $U_2 - f(q_1)$ will force the map to leave the chaotic attractor and settle on the point attractor **P.** A parasitic point attractor will appear unless $I_+ < U_2$. On the other hand it is a mandatory requirement that $I_+ > f(q_1)$, otherwise a periodic attractor appears instead of the intended chaotic attractor as illustrated on Fig. 6.

The periodic orbit of period 8 of Fig. 6 has been drawn as explained hereinbelow using map (3) with a small positive saturation value $I_+ < f(q_1)$ and with the following parameters:

$$q_1 = 1.105;\ k_1 = 1.93;\ k_2 = 1.8;\ I_- = -1.054;\ I_+ = 0.698;$$

Assuming $q_1$ as starting value

$$x_0 = q_1$$

the next value $x_1$ is calculated using map (3). $x_1$ is fixed at value $I_+$ because $I_+ < f(q_1)$, thus the starting point of the periodic orbit of Fig. 6 is ($x_0$,$I_+$). The second point is ($I_+$,$I_+$) and it is obtained drawing an horizontal line from the starting point as far as the line of equation $f(x) = x$ is crossed. The third point is ($x_1$, $x_2$) and is obtained calculating $x_2$ applying Eq. (3) to $x_1$. The fourth point is obtained drawing an horizontal line from the third point ($x_1$, $x_2$) as far as the line of equation $f(x) = x$ is crossed, and so forth.

In the following description the term "parasitic periodic attractors" will denote both point and periodic attractors. In order to ensure a reliable operation of a chaos based RNG, the chaotic attractor must have a global basin of attraction.

From Eq. (2) it is possible to say that, in order to avoid parasitic attractors, the behavior of Eq. (3) should be analyzed only in the region P = $\{(k_1,k_2,q_1)|1 < k_1 < 2,\ k_1 \leq k_2 < 2,\ k_1 - 1 < q_1 < 1/(k_2 - 1)\}$ of the 3D parameter space $k_1 \times k_2 \times q_1$.

**Generating and Markov partitions**

Let us consider a binary generating partition $\beta = \{C_1, C_2\}$ only, where $C_1 = (q_2,0)$ and $C_2 = [0, q_1)$. Therefore, it is implicitly assumed that there is no mismatch between the boundary point 0 of $\beta$ and the discontinuity point 0 of the PL1 D map.

This assumption is justified by the practical implementation of the PL1D map and the RNG, where a single threshold circuit is used to both iterate the map, that is, to implement the discontinuity point 0 and to generate output bits, that is, to implement boundary point 0 of $\beta$. Using a single threshold circuit also implies simpler hardware.

The main motivation to search for Markov partitions is presented next.

There is no general way to analytically find the natural invariant density using Perron-Frobenius operator, and then to compute KS entropy or entropy for a given partition. This problem is highly relieved and analytically tractable when the chaotic information source is a Markov source.

Piecewise linear maps, which are linear inside each region of the Markov partition, give rise to a Markov source. Their natural invariant density is piecewise constant, and Perron-Frobenius operator can be substituted by the transition stochastic matrix of the Markov source whose transition probabilities are:

$$P_{ij} = \frac{\mathrm{L}(C_j \cap f^{-1}(C_1))}{\mathrm{L}(C_j)} \tag{5}$$

where L(.) denotes Lebesgue measure. It is possible to calculate analytically transition probabilities $P_{ij}$ using Eq. (5), state probabilities by inverting or iterating the transition matrix, natural invariant density by dividing probabilities of each region by Lebesgue measure of the region, and structure and amount of information redundancy.

In the knowledge of the inventors there is not any work showing Markov character of symbolic dynamics for other families of Markov maps other than piecewise linear maps.

For other types of parametric maps, the Markov character can be easily determined by testing the generated

sequence.

**Dependence on parameters**

Smaller values for $k_1$ and $k_2$ give a larger margin against complete failure in sense of abandoning the chaotic motion. On the other hand, values for $k_1$ and $k_2$ closer to 2 give higher entropy $h_{KS}$. Therefore, when designing a RNG one must reach a compromise on the slopes $k_1$ and $k_2$. Making a proper compromise on these slopes and a proper choice of parameters for RNG purposes is possible only if the consequences on the information generation mechanism of changes in $k_1$, $k_2$ and $q_1$ may be derived.

In this subsection values of parameters for which β is a Markov partition for map (3) are searched. Searching and analyzing the 3D parameter region P is difficult to accomplish, so only certain 1D regions are analyzed. For these regions it is possible to derive mathematical equations for the parameters for which β is a Markov partition, and to understand the consequences on the random number generation process of the choice of values of parameters.

From observed phenomena in these regions it is possible to deduce the behavior of map in the 3D region P, thus enabling us to choose parameters in an optimal manner.

$$\text{Region P} = \{(k_1,k_2,q_1)|1 < k_2 = k_1 < 2,\ q_1 < 1$$

First we consider the 1D region $P_1$, where the slopes are equal $k_1 = k_2 = k$, offsets are symmetric $q_1$ = 1 and -1, and $k$ denotes the common value of slopes in the two regions. Thus, Eq. (3) transforms into

$$x_{n+1} = f(x_n) = \begin{cases} 1 + kx_n & \text{for } x_n < 0 \\ -1 + kx_n & \text{for } x_n \geq 0 \end{cases} \quad (6)$$

Topological and metric entropy are equal to *log k*, and the Lyapunov exponent is positive λ = *lnk*. Map (6) behaves as an information source with source entropy *log k*, and redundancy 1 - *log k* in β-partitioned space.

**Theorem 1:** β is a Markov partition of order $r$ if and only if $r$ is the smallest integer such that $f_1^r(q_1) = 0$.

**Theorem 2:** β is a Markov partition of order $r$ if and only if $r$ is the smallest integer for which there is a vector of positive integers $\mathbf{J} = [J_1,J_2,\cdots,J_m]$, $J_i \leq J_m$, $i = 1,\cdots,m$ satisfying

$$-1 + \sum_{i=1}^{i=m} J_i = r$$

such that $k$ is a root of the polynomial

$$(-1)^m k^{S_m+1} - 2\sum_{i=1}^{i=m}(-1)^i k^{S_i} - 1 = 0 \quad (7)$$

where $S_0 = 0$, $S_i = S_{i-1} + J_i$ for $i = 1,\cdots,m$.

The set of $k$ values that produce Markov partitions is a countably infinite set, and therefore its Lebesgue measure is 0. Even if it is practically improbable, these $k$ values are dense in $P_1$, and information generation mechanism can be analytically analyzed arbitrarily close to any point from $P_1$.

**Region P** = $\{\{k_1,k_2,q_1)|1 < k_2 = k_1 < 2,\ q_1 = k_1 - 1\}$

Next we consider map (3) in region $P_2$ where slopes $k_1 = k_2 = k$ are equal in both regions, and $q_1 = k - 1$, which implies $f(-1) = -1$. Then Eq. (3) transforms into

$$x_{n+1} = f(x_n) = \begin{cases} k - 1 + kx_n & \text{for } x_n < 0 \\ -1 + kx_n & \text{for } x_n \geq 0 \end{cases} \tag{8}$$

Theorem 1 applies also for region $P_2$. The following theorem defines slopes $k$ for which β is a Markov partition.

**Theorem 3:** β is a Markov partition of order $r$ if and only if $r$ is the smallest number for which there is a vector of positive integers $\mathbf{J} = [J_1, J_2, \cdots, J_m]$, $J_l \leq J_m$, $i = 1,\cdots,m$ satisfying

$$-1 + \sum_{i=1}^{i=m} J_i = r$$

such that $k$ is a root of the polynomial

$$k^{r+1} - \sum_{i=1}^{r} b_i k^i - 1 = 0 \tag{9}$$

where vector $[b_r,\cdots,b_1]$ consists in a sequence of $J_m$ values -1 followed by a sequence of $J_{m-1}$ values 0 followed by a sequence of $J_{m-2}$ values -1 etc. and ends with a sequence of $J_1$-1 values 0 if $m$ is even or values -1 if $m$ is odd.

**Redundancy reduction techniques**

As shown in previous subsection, larger $k_1$ and $k_2$ mean smaller redundancy and a better RNG, but they also mean a higher risk of appearance of periodic attractors and of breakdown of the RNG. Therefore, $k_1$ and $k_2$ must be small enough to assure chaotic behavior of (1) across all temperature and power supply fluctuations.

Increased redundancy for smaller $k_1$ and $k_2$ must be lowered via processing the output bits. Redundancy in an information source can be due to two sources:

- difference in the probabilities of the two binary symbols;
- memory of an information source.

A good redundancy reduction technique must affect both sources of randomness. The two simplest redundancy reduction techniques, which can be implemented on-chip with a very simple circuitry, are bit skipping [13, 14] and bit counting.

Hash functions [23] might be more effective than bit skipping or counting in the sense that they provide larger reduction of redundancy for a given $p$. However, analysis of hash functions is incomparably more difficult than for the case of bit skipping and bit counting because an output bit of a hash function depends on many input bits. Implementing a hash function may require a complicated hardware.

Using a bit skipping technique, only every $p$-th bit from the original binary sequence is used. For example, if the original sequence is $X_0$, $X_1$, $X_2$, $\cdots$ then using a bit skipping technique in which only one bit over $p$ bit is used will produce the sequence $X_0$, $X_p$, $X_{2p}$,$\cdots$. Skipping bits reduces only the redundancy due to the memory of an information source, but it does not reduce the difference in the probabilities of the two binary symbols. When $p \to \infty$, the redundancy tends to 1- $H_B(P\{X = 0\})$ where $P\{X = 0\}$ is probability of binary symbol 0.

In bit counting, bits from the original binary sequence are grouped in blocks of $p$ bits and summed up modulo 2 to produce an output bit. For example, if the original sequence is $X_0,X_1,X_2,\cdots$, then bit counting with blocks of $p$ bits will produce the sequence $Y_0,Y_p,Y_{2p},\cdots$, where $Y_{ip} = X_{ip} \oplus X_{ip+1} \oplus\cdots\oplus X_{ip+p-1}$ and $\oplus$ denotes summation modulo 2. For a given $p$, a lower limit of redundancy is 1 - $H_B(P\{X= 0\})$, where $P\{X = 0\}$ is probability of binary symbol 0 in the new sequence $Y_0,Y_1,Y_2,\cdots$, and

$$\lim_{p\to\infty} P\{Y = 0\} = 0.5\ .$$

Bit counting is equivalent to the following redundancy reduction technique: from the original sequence $X_0$,$X_1$, $X_2$,··· producing a new sequence $Z_0$,$Z_1$,$Z_2$,··· via $Z_0 = X_0$, $Z_i = Z_{i-1} \oplus X_i$ for $i > 0$, and then applying bit skipping thus yielding the sequence $Z_p$, $Z_{2p}$, $Z_{3p}$,···. Bits from sequences $Y_0$,$Y_p$, $Y_{2p}$,··· and $Z_p$,$Z_{2p}$,$Z_{3p}$,··· are related via the deterministic transformation $Z_p = Y_0$ and $Z_{(i+1)p}=Z_{ip} \oplus Y_{ip}$ for $i > 0$, and therefore their entropies and redundancies are identical. Which redundancy reduction technique is the best one, depends on the ease of practical implementation: they can be both implemented with a one-stage binary counter, the only difference being that the binary counter is set to 0 at the start of every block of $p$ bits.

Differently from bit skipping, bit counting affects both sources of redundancy. This is the reason why bit counting is superior to bit skipping, in the sense that it is more robust to the inevitable fluctuations of the parameter values from the nominal ones, and provides lower redundancy.

Both bit counting and bit skipping reduce output bit generation rate by $p$ times, and it is necessary to find a compromise between reduction in the redundancy and reduction in the bit generation rate. Therefore, results only for moderate values of $p \le 6$ are given. Even for $p \le 6$ redundancies are very small, and further reduction in the bit generation rate by choosing larger $p$ cannot be justified.

Preferably, the generated sequence is tested to verify that its redundancy really assumes a desired value. It is also possible to calculate the functional dependence of the redundancy from values of parameters and choose them accordingly to generate a random sequence with a desired redundancy.

**Optimum choice of parameters**

When the map (3) is used as a RNG, it is desirable to be secure against appearance of parasitic attractors. When designing a RNG, from the circuit implementation one can compute the fluctuations in $I_+$ and $I_-$ due to temperature, power supply, and fabrication fluctuations, and then one can specify a minimum required margin $L_{min}$ against appearance of parasitic attractors. A further requirement is that the bit generation rate is higher than a certain value $\nu_b$, which for a given clock frequency $\nu_c$ transforms into a requirement that $p \le p_{max} = [\nu_c/\nu_b]$, where $[x]$ denotes the largest integer smaller than or equal to $x$. For given $L_{min}$ and $p_{max}$, we define the optimum parameters as the set of parameters $(k_1, k_2, q_1, p)_{opt}$ that minimizes redundancy $\rho$ amongst all sets of parameters $(k_1,k_2,q_1,p)$ that satisfy $(k_1, k_2, q_1) \in P$, $p \le p_{max}$, $L \ge L_{min}$, that is,

$$(k_1, k_2, q_1, p)_{opt} = \min_{(k_1, k_2, q_1) \in \mathrm{P}, p \le p_{max}, L \ge L_{min}} \rho \qquad (10)$$

Brute-force searching of optimum parameters in P is a formidable task, because optimization in the 1D region $P_1$ provides results that are almost as good as those obtained by optimization in the 3D region P.

Instead of searching P, let us restrict our attention to a 3D region $P_3 = \{(k_1,k_2,q_1)|\ k_1 \in (1.6,1.9),\ k_2 \in (k_1, 1.9),\ q_1 \in (0.9,1.1)\}$. Very small slopes give small $h^\beta$ entropy, while very large ones provide small margin $L$. For larger $|q_1-1|$, the map becomes increasingly asymmetrical and the difference in probabilities of 0s and 1s increases.

It is possible that a local minimum of a redundancy curve in $P_1$ is not a local minimum in P. Then a set of parameters lying very close to $P_1$ is a local minimum in P. This was the motivation to examine 1% and 2% neighborhoods of $P_1$, $P=\{(k_1,k_2,q_1)|\ k_1 \le k_2 \le 1.01k_1,\ 0.99 \le q_1 \le 1.04\}$ and $P_{1,2\%}$ defined in a similar way to $P_{1,1\%}$.

The region $P_3$ has been divided into 115351=61×61×31 equal cubes. For a point $(k_1,k_1,1)$ lying in $P_1$, 1% neighborhood is defined as $\{(k_1,k_2,q_1)|\ k_1 \le k_2 \le 1.01k_1,\ 0.99 \le q_1 \le 1.01\}$. The 1% neighborhoods of 80 points $k_1$ = 1.6,1.605,1.61,···,1.995 have been divided into 288 equal cubes thus producing a total of 23040 cubes in $P_{1.1\%}$. An analogue procedure was repeated for $P_{1.2\%}$. For each of the 115351+23040+23040 cubes an inner point for which $\beta$ is a Markov partition of order $r \le 12$ (12 is chosen because the execution time and the memory requirements of the computer program that computes redundancies grow exponentially with r) has been found. Then for each of these inner points redundancies of bit skipping and bit counting for $2 \le p < 6$ are computed.

**Circuit Design**

Parameter variations due to implementation imprecision and external influences (temperature, power supply etc.) need to be estimated. Given that such variations are slower than the iteration speed of the map, their temporal changes can be neglected and it is possible to state approximately that the parameters are constant in time, though mismatched from the nominal ones.

The chaotic map (1) may be implemented in VLSI technology. Fig. 7 shows a VLSI implementation of map

(1), in a standard 0.8μm CMOS process [32]. The implementation is a switched-current circuit based on [17].

The upper half of the circuit performs the slope multiplication and storage operation, and the lower half performs the non-linear discrimination function [17]. The upper half is substantially constituted by an amplifier with saturation values. The amplification ratio may be set to a certain desired value by properly designing the dimensions of the first (T11, T13, T12) and of the second (T14, T30, T15) switched current mirror. For example, if an amplification ratio equal to 2 is desired, i.e. the slope of the piecewise linear one dimensional map is $k = 2$, it is possible to make transistors T11, T13 and T14 equal, and transistor T30 with an aspect ratio *W*/*L* double than the aspect ratio of T14. In this way the first switched current mirror T11, T13, T12 acts as a not amplifying input stage, while the second switched current mirror T14, T30, T15 amplifies the input current $I_{in}$ of the desired factor.

The discriminator operates in one of two modes: for $I_1 > 0$ T18, T19 are on and T20, T29 conduct so that through T17 flows a current $I_{out} = I_1 - I_a$. For $I_1 < 0$ T8, T9 are on and T10, T28 conduct so that through T4 flows a current $I_{out} = I_1 + I_a$. The discriminator may be conveniently realized using inverting stages (T8, T18; T9 T19; T28, T29; T10, T20) as depicted in the mentioned figure. Substantially, it is a circuit that compares the current $I_1$ with the threshold value, which in this particular case is *T,* = 0, and produces a current $I_{out}$ by adding to or subtracting from a constant current $I_a$ the current $I_1$, depending on the result of this comparison.

The voltage on node Q output by the inverting stage T9, T19 may assume only two possible logic values, depending on the result of the comparison. Such logic values constitute the desired random bit sequence.

The figure shows the setup for open-loop simulation where the output current is terminated in a load stage (in the dotted rectangle) T25, T21, biased by T5, equivalent to the input stage T22 and T11. During closed-loop operation, the current $I_{out}$ does not circulates anymore in the load stage T25 and T21 but it circulates through the input stage T22 and T11 instead of current $I_m$, and two non-overlapping clock signals $\Phi_1$ and $\Phi_2$ drive the switches T12 and T15, respectively.

As compared to [17], several improvements have been introduced. The transistors T22...T25 have been added to enable an operating voltage at $I_1$, close to $V_{dd}/2$. This will ensure the transistors which transmit signal current are in their linear regions, as well as enable a symmetric switching characteristic of the inverters T8-T18, T9-T19. The capacitors C1, C2 (preferably realized by transistor gates), and the transistors T26 and T27 have been added to reduce the effects of clock feed-through.

Clock feed-through is the undesirable effect of the clock signal being injected into the signal path through the gate-source capacitance of the switches T12, T15, and it will manifest itself as a nonlinear offset in the map function. If not compensated, clock feed-through destroys the linearity of the two regions of Eq. (1), and renders our analysis invalid, e.g. the chosen parameters are not optimal anymore.

Capacitors C1 and C2 will cause the voltage drop on the gates of T13 and T15 to decrease as charge is injected into a larger capacitance. Obviously, the price paid is a reduction of the speed of the circuit since settling time is increased. Effectively, we have traded reduced clock speed for reduced clock feed-through.

Transistors T26 and T27 further decrease clock feed-through by means of charge cancellation [33], that is, by using the inverted clock signals, injecting a charge of opposite sign into the gates of T13 and T15. The clock feed-through is, however, non-linear so that the cancellation cannot be perfect. As a third measure to decrease clock feed-through, the clock signal swing is reduced to 3V (being the supply voltage $V_{dd}$ = 5V ).

Resistor $R_1$ determines current $I_a$ which corresponds to $q'_1$ and $q'_2$ from (1), and resistor $R_2$ determines current $I_q$, which in turn determines $I_{out}$ in saturation. $R_1$ and $R_2$ may be external components.

The circuit was designed for a nominal threshold value of T, = 0, and a nominal slope of 1.82. This corresponds to one of the minimums of the redundancy curve for $p = 5$. The slope is small enough to provide a good margin $L$ = 19.6%.

### Circuit Analysis

With the circuit extracted from layout, the design was simulated open-loop in SPICE across 4.5···5.5V power supply range and temperatures -25°C···+75°C, at typical mean process conditions. The proprietary charge based transistor model from AMS (Level 15) was used [32]. $I_q$ was selected to 16μA and $I_a$ to 12μA. For each pair of temperature and power supply, redundancies for bit counting and bit skipping with $p = 2,\cdots,6$ were computed.

Maximum redundancy over all temperatures and power supplies is minimum for $p = 5$ with a value of 0.4%. No parasitic attractors were detected. This was found to be true also far different process corners except for worst case speed process parameters. A different setting of $I_q$ and $I_a$, yielding no parasitic attractors could, however, be found also for this process corner. The map, obtained from circuit simulation after layout is shown in Fig. 8 (27°C +5V).

The slope is 1.82 at 5V and 27°C. Simulations also indicated a maximum clock feed-through in $I_{out}$ of 0.3μA across its entire range. On a step input from -9μA to +9μA in $I_{in}$, $I_{out}$ settles to within 0.1μA in 140nsec. Maximum operating clock frequency is estimated to 5MHz, which together with bit counting with $p = 5$ yields a total RNG bit rate of 1Mbit/sec. This is substantially higher than the output bit rate of the RNGs available on the market: from 7600 bits/sec to 76000 bits/sec. Furthermore, our RNG requires no software postprocessing as several prior art RNGs.

The following table summarizes the implementation results for VLSI realization of PL1D map in switched current technique, as obtained by post-layout SPICE simulations.

| | |
|---|---|
| Technology | 0.8μm CMOS |
| Silicon area | 51 × 46μm |
| Nominal slope | 1.82 |
| Max. Hysteresis | 0.09μA |
| Current discrimination | 200pA |
| Max. clock feed-through | 0.3μA |
| Max. clock frequency | 5MHz |

To construct a RNG based on chaos, we have exploited the double nature of chaos: deterministic in microscopic space and by its defining equations, and random in macroscopic space. We can analytically find probability of generation of any binary sequence and the probabilities of passing or failing statistical tests for given significance levels. Therefore, statistical tests are useless for our chaotic RNG, and for any other chaotic RNG whose information generation mechanism is completely understood and analyzed. Our chaos based RNG is mathematically proven to act as an information source, its entropy and redundancy can be analytically computed, it is not prone to silent breakdowns, its optimum parameters can be found, and it can be efficiently implemented on-chip.

**References**

[1] C.E. Shannon, "Communication theory of secrecy systems", *Bell Syst. Techn. J,* vol. 28, pp. 656-715, 1949.

[2] C.H. Vincent, "The Generation of Truly Random Binary Numbers", *Journal of Physics E*, *vol. 3,* pp. 594-598, 1970.

[3] R.S. Maddocks, S. Matthews, E.W. Walker, and C.H. Vincent, "A compact and accurate generator for truly random binary digits", *Journal of Physics E,* vol. 5, pp. 542-544, 1972.

[4] II.F. Murry, "A general approach for generating natural random variables" *IEEE Trans. Computers,* vol. 19, pp. 1210-1213, 1970.

[5] N.O. Sokal, "Optimum choice of noise frequency band and sampling rate for generating random binary digits from clipped white noise", *IEEE Trans. Computers*, vol. 21, pp. 614-615, 1972.

[6] W.T. Holman, J.A. Connelly, and A.B. Dowlatabadi, "An Integrated Analog/Digital Random Noise source", *IEEE Trans. Circ. Syst. I,* vol. *44,* no. *6*, pp. 521-528, June 1997.

[7] John Walker, ,"HotBits: Genuine random numbers, generated by radioactive decay", http://www.fourmilab.ch/hotbits/.

[8] G.B. Agnew, "Random sources from cryptographic systems", *Advances in Cryptology - CRYPTO '85,* pp. 77-81, Springer-Verlag 1986.

[9] A.J. Martino and G.M. Morris, "Optical random number generator based on photoevent locations", *Applied Optics,* vol. 30, no. 8, pp. 981- 989, March 1991.

[10] Rand Corporation, "A million random digits with 100 000 normal deviates", The Free Press. Glencoe, Illinois, 1955.

[11] R.C. Fairfield, R.L. Mortenson, and K.B. Coulthart, "An LSI Random Number Generator (RNG)", *Advances in Cryptology - Crypto '84,* pp. 203-230, Springer-Verlag 1984.

[12] L. Letham, D. Hoff, and A. Folmsbee, "A 128K EPROM using encryption of pseudorandom numbers to enable random access", IEEE *Journal of Solid-State Circuits,* vol. SC-21, pp. 881-887, October 1986.

[13] S. Espejo-Meana, A. Rodriguez-Vazquez, J.L. Huertas, and J. M. Quintana, "Application of chaotic switched-capacitor circuits for random-number generation", *European conference on circuit theory and design 1989*, pp. 440-444, 1989.

[14] G.M. Bernstein and M.A. Lieberman, "Secure random number generation using chaotic circuits", *IEEE Trans. Circ. Syst., vol. 37*, pp. 1157- 1164, 1990.

[15] Rodriguez-Vasquez, M. Delgado, S. Espejo, and J.L. Huertas, "Switchedcapacitor broadband noise generator for CMOS VLSI", *Electronics letters,* vol. *27,* no. *21*, pp. 1913-1915, October 1991.

[16] M. Delgado-Restituto, A. Rodriguez-Vasquez, S. Espejo, and J. L. Huertas, "A chaotic switched-capacitor circuit for l/f noise generation", *IEEE Trans. Circ. and Syst.-I*, vol. 9, no. 4, pp. 325-328, April 1992.

[17] M. Delgado-Restituto, F. Medeiro, and A. Rodriguez-Vasquez, 'Nonlinear switched-current CMOS IC for random signal generation", *Electronics letters,* vol. 29, *no. 25,* pp. 2190-2191, December 1993.

[18] T. Kuusela, "Random number generation using a chaotic circuit", *J. Nonlinear Sci.*, vol. *3,* no. 4, pp. 445-458, 1993.

[19] D. Davis, R. Ihaka, and P. Fenstermacher, 'Cryptographic randomness from air turbulence in disk drives", *Advances in Cryptology -CRYPTO '94,* pp. 114-120, Springer-Verlag 1994.

[20] Vizvári and G. Kolumbán, "Quality evaluation of random numbers generated by chaotic circuits for secure communication", *Rutcor Research Report,* RRR 13-96, April 1996.

[21] J. Marron, A.J. Martino, and G.M. Morris, "Generation of random arrays using clipped laser speckle", *Appl. Opt.,* vol. 25, no. 1, pp. 26-30, 1986.

[22] Ph. Lalannc, J.C. Rodier, P. Chavel, E. Belhaire, and P. Garda, "Optoelectronic devices for Boltzmann machines and simulated annealing", *Opt. Eng.,* vol. 32, no. 8, pp. 1904-1914, 1993.

[23] D. Eastlake, S. Cracker, J. Schiller, "Randomness recommendations for security", Request for Comments 1750, December 1994.

[24] A. Lempel and J. Ziv, "On the complexity of finite sequences" , IEEE *Trans. Inf. Theory*, vol. IT-22, pp. 75-81, 1976.

[25] J. Ziv and A. Lempel, "A Universal Algorithm for Sequential Data Compression", *IEEE Trans. Inf. Theory,* vol. IT-23, pp. 337-343, May 1977.

[26] Comscire - The Quantum World, Colorado, USA.
http://shell.rmi.net/comscire/.

[27] Tundra, "RBG1210 Random Bit Generator", Canada.
http://www.tundra.com/ Tundra/Products/Encryption/RBG1210.html.

[28] Orion, "Orion's RNG", Netherlands.
http://valley.interact.nl/AV/COM/ORION/RNG/home.html.

[29] Protego, "SG100 generator", Sweden. http://www.protego.se.

[30] Robert Davies, "Random number generators",
http://nz.com/webnz/robert/recent/lottery.html

[31] G.C. McGonigal and M.I. Elmasry, "Generation of Noise by Electronic Iteration of the Logistic Map", *IEEE*

*Trans. Circ. Syst.*, vol. CAS-34, pp. 981-983, 1987.

[32] Austria Mikro Systems, 0.8μm CMOS process, 1995.

[33] R. Gregorian and G. C. Temes, "Analog MOS Integrated Circuits for Signal Processing", John Wiley&Sons, 1985.

## Claims

**1.** A method for generating a random number sequence, comprising the following steps:

defining a parametric map;
calculating, in function of parameters of said map, the entropy and the Lyapunov exponent of random number sequences obtainable using said parametric map; identifying at least a set of values ( P ) of said parameters, for which said entropy and said Lyapunov exponent are positive numbers and said parametric map has no attracting point;
assigning a pre-established value as a first feedback value and carrying out cyclically the following steps for generating a random number sequence:

a) determining said parameters inside said set ( P ) as the numerical values of respective physical quantities;
b) outputting a random number, according to said map with said parameters and said assigned feedback value;
c) assigning as new feedback value said output random number.

**2.** The method of claim 1, comprising
calculating the redundancy or the Markov character of the sequence generated by said parametric map; and identifying a set of values (P) of said parameters for which the generated sequence has a desired redundancy or Markov character.

**3.** The method of claim 1 or 2, wherein said map is a piecewise linear one-dimensional parametric map with saturation values.

**4.** A method for generating a random bit sequence with pre-established entropy and Lyapunov exponent, comprising
defining a pair of sets of values first ($C_1$) and second ($C_2$) by a Markov partition of the set of real numbers;
producing random numbers according to the method of one of claims from 1 to 3;
outputting a high (1) or a low (0) random bit for each random number, whether said random number is comprised in said first set ($C_1$) or said second set ($C_2$), respectively.

**5.** The method of claim 4, wherein the output random bit sequence is further filtered by way of a redundancy reduction technique.

**6.** The method of claim 5, wherein said redundancy reduction technique consists in carrying out the following steps:

producing each bit of the filtered sequence as the sum modulo 2 of a corresponding number (p) of consecutive bit of said output sequence.

**7.** The method of claim 5, wherein said redundancy reduction technique consists in taking only one bit over a certain number ($p$) of bits of said output random bit sequence.

**8.** A closed loop oscillating random bit generator for producing a random bit sequence according to the method of claim 4 for a piecewise linear one-dimensional map with null threshold value ($T_L$) and constituted by two linear segments having the same slope ($k$) and opposite constant value ($q$), comprising
an amplifier initially input with a loop excitation signal ($I_{in}$) and successively with a feedback signal ($I_{out}$), outputting a multiplication signal ($I_1$) obtained multiplying its input signal ($I_{in}$, $I_{out}$) by said slope value ($k$);
a comparing and adding stage producing said feedback signal ($I_{out}$) as the sum of, or as the difference between, a multiplication signal ($I_1$) and a constant signal ($I_a$) representing said constant value ($q$), respectively whether said

multiplication signal ($I_1$) is smaller or greater than zero, and producing an active or an inactive random output bit (Q) whether said feedback signal ($I_{out}$) is greater or smaller than zero, respectively.

**9.** The generator of claim 8, wherein said amplifier is a switched current circuit comprising a pair of switched current mirrors (T11, T13, T12; T14, T30, T15) in parallel between them, whose switches (T12; T15) are driven by two non overlapping clock signals ($\Phi_1$, $\Phi_2$), each switched current mirror has a respective diode connected transistor (T22; T23) as an active load, and each switch (T12; T15) has a current terminal connected to a respective anti feed-through capacitor (C1;C2) and to a respective anti feed-through short-circuited transistor (T26; T27) driven in phase opposition ($\overline{\Phi_1}$, $\overline{\Phi_2}$).

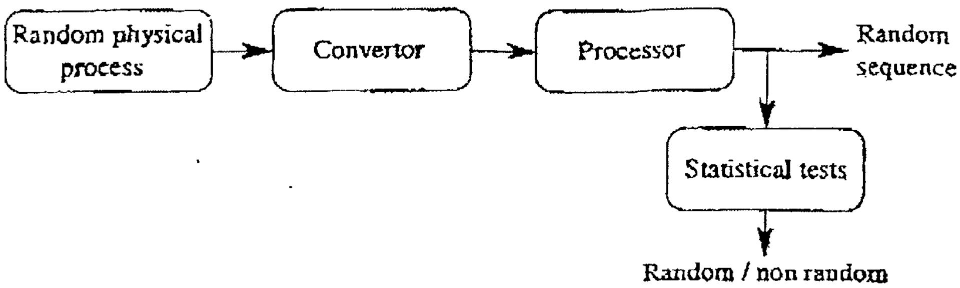


FIG. 1

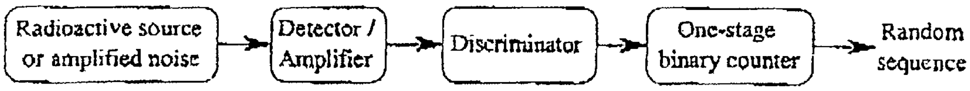


FIG. 2

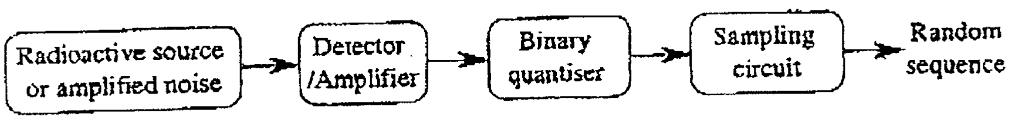


FIG. 3

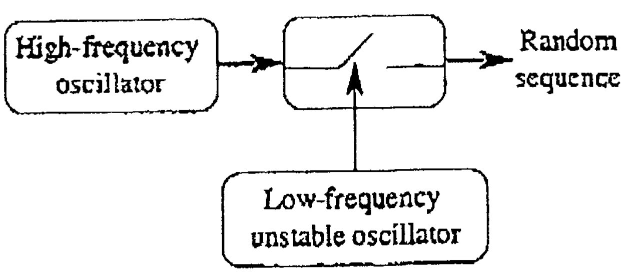


FIG. 4

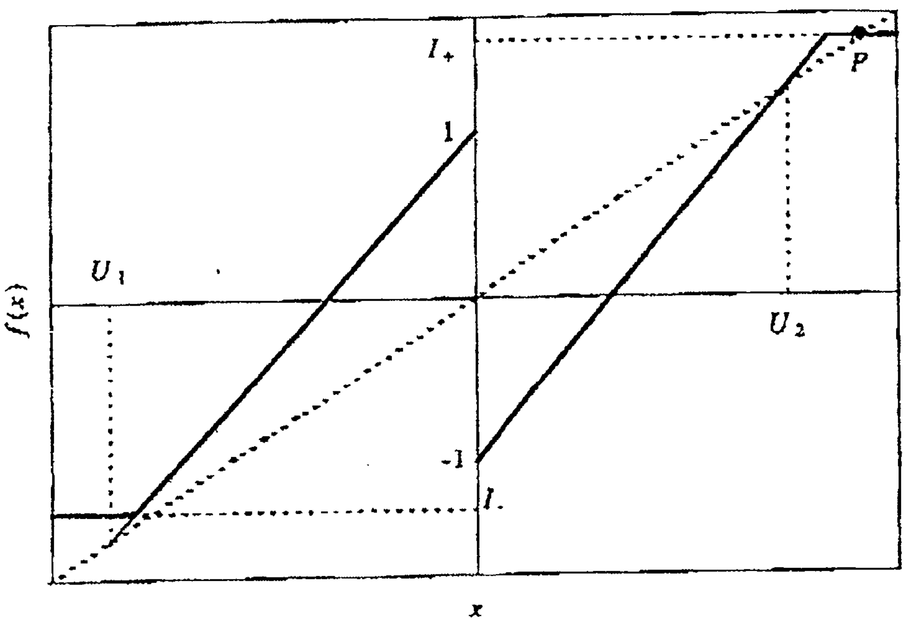


**FIG. 5**

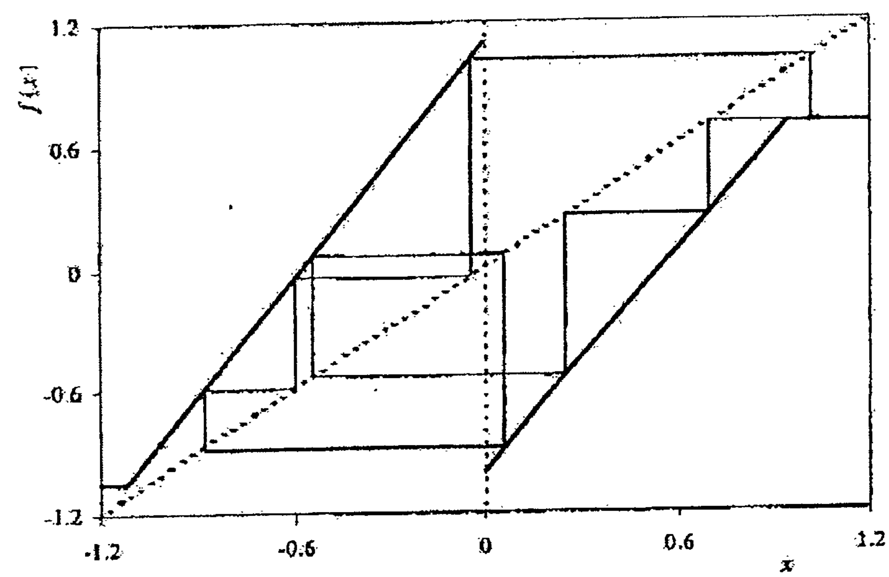


**FIG. 6**

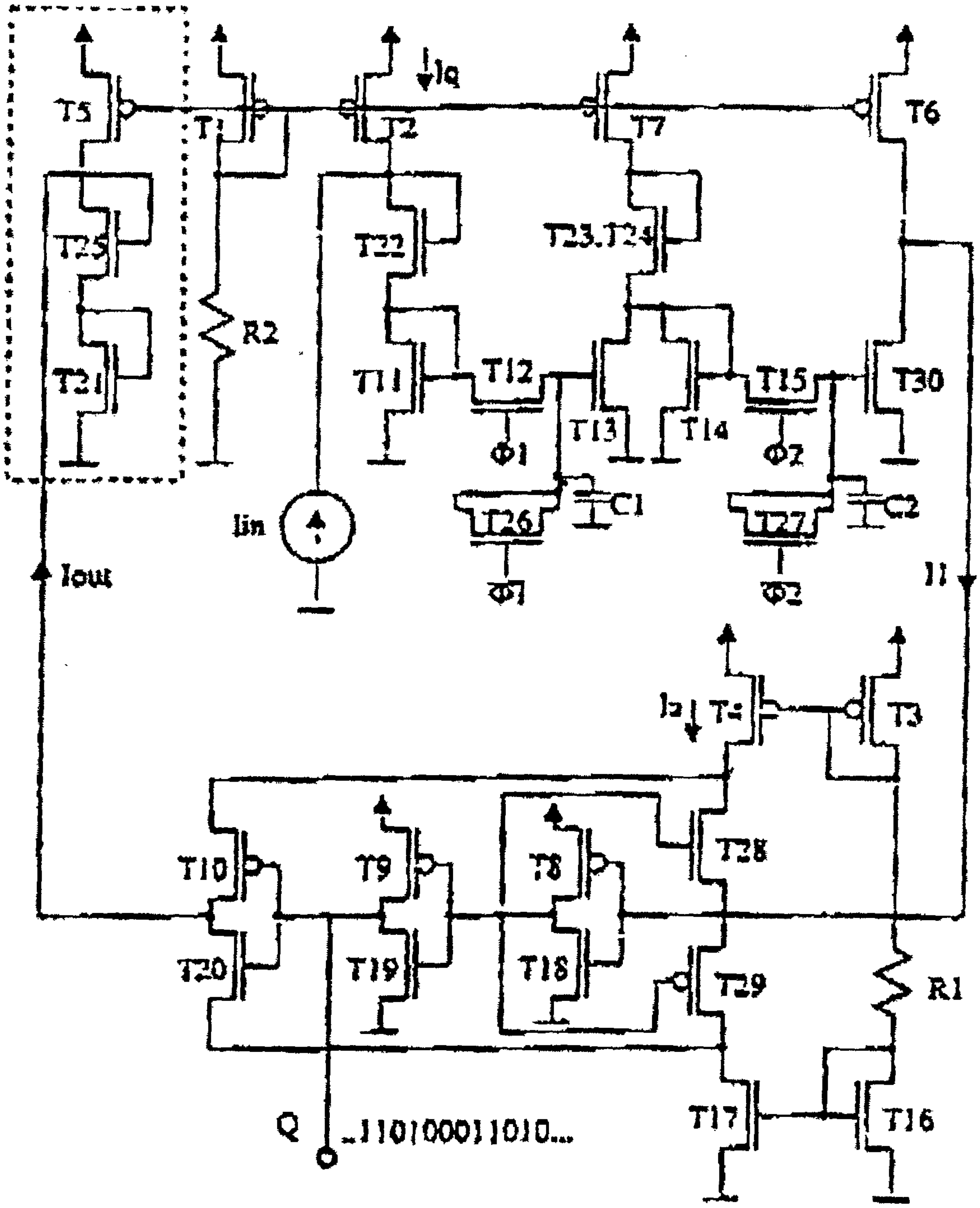
T5
T1
T2
Iq
T7
T6
T25
T22
T23,T24
R2
T21
T11
T12
T13
T14
T15
T30
Φ1
Φ2
T26
C1
T27
C2
Iin
Iout
I1
I2
T4
T3
T10
T9
T8
T28
T20
T19
T18
T29
R1
T17
T16
Q
..11010001 1010...

FIG. 7

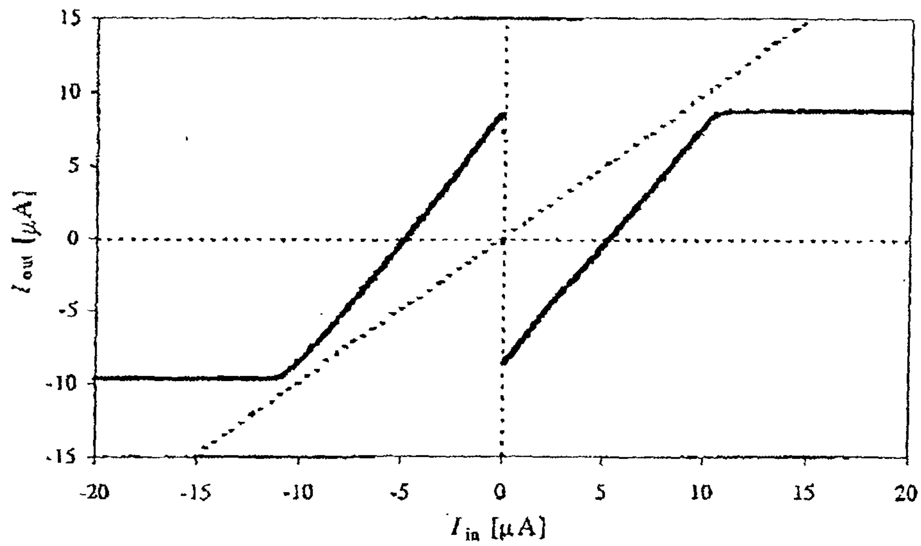


**FIG. 8**

European Patent Office

# EUROPEAN SEARCH REPORT

Application Number
EP 01 83 0764

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KOTULSKI Z ET AL: "Discrete chaotic cryptography" ANNALEN DER PHYSIK, BARTH, LEIPIG, DE, vol. 6, no. 5, 1997, pages 381-394, XP002097239 ISSN: 0003-3804 * abstract * * paragraph '0004! * | 1-9 | G06F7/58 |
| D,A | DEGALDO-RESTITUTO M ET AL: "NONLINEAR SWITCHED-CURRENT CMOS IC FOR RANDOM SIGNAL GENERATION" ELECTRONICS LETTERS, IEE STEVENAGE, GB, vol. 29, no. 25, 9 December 1993 (1993-12-09), pages 2190-2191, XP000430600 ISSN: 0013-5194 * the whole document * | 1-9 | |

TECHNICAL FIELDS SEARCHED (Int.Cl.7)
G06F

The present search report has been drawn up for all claims

| Place of search | Date of completion of the search | Examiner |
|---|---|---|
| THE HAGUE | 19 September 2002 | Cohen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)